# EUROPÄISCHE PATENTSCHRIFT

(11) **EP 2 187 282 B1**
(45) Veröffentlichungstag und Bekanntmachung des Hinweises auf die Patenterteilung: **01.02.2012**
(21) Anmeldenummer: 08019635.5
(22) Anmeldetag: 10.11.2008
(51) Int. Cl.: G05B 19/418, G06F 21/00, G06Q 10/00

(54) **Verfahren zum Betreiben einer Anlage unter Verwendung von gegen unberechtigte Verwendung gesicherten Daten**
Method of operating a system using data protected from unauthorised use
Procédé de fonctionnement d'une installation utilisant des données sécurisées contre l'utilisation non autorisée

(43) Veröffentlichungstag der Anmeldung: 19.05.2010
(73) Patentinhaber: Siemens Aktiengesellschaft, 80333 München (DE)
(72) Erfinder: Cuellar, Jorge, Dr., 82065 Baierbrunn (DE); Köpken, Hans-Georg, Dr., 91056 Erlangen (DE); Lenord, Matthias, Dr., 91088 Bubenreuth (DE); Maidl, Monika, Dr., 81675 München (DE)

(56) Entgegenhaltungen:
- EP-A- 1 784 015
- EP-A- 1 947 587
- WO-A-2006/129983
- US-A1- 2007 219 921

## Beschreibung

Die Erfindung betrifft ein Verfahren und eine korrespondierende Vorrichtung zum Betreiben einer technischen Anlage, z.B. einer Produktionsanlage, unter Verwendung von Daten, die von einem Dritten bereitgestellt und gegen unberechtigte Verwendung gesichert sind oder werden. Die Absicherung der Daten gegen unberechtigte Verwendung erfolgt mittels so genannter Rechteobjekte. Die Erfindung betrifft darüber hinaus eine Vorrichtung mit Mitteln zur Ausführung des Verfahrens, ein korrespondierendes Computerprogramm, einen Datenträger mit einem solchen Computerprogramm und ein Computersystem, auf dem ein solches Computerprogramm geladen ist.

Die Erfindung befasst sich mit dem Problem der Sicherung geistigen Eigentums im Zusammenhang mit dessen Weitergabe an einen externen Dienstleister, z.B. ein Produktionsunternehmen, das im Auftrag des Inhabers der Rechte an diesem geistigen Eigentum (Rechteinhabers) nach dessen Spezifikationen, also aufgrund des jeweiligen geistigem Eigentums, bestimmte Teile, Gegenstände, Produkte usw. fertigt. Andere Beispiele sind durch externe Dienstleister durchgeführte Simulationen, Tests und so weiter. Bisher besteht zwischen dem Rechteinhaber und dem Dienstleister im Wesentlichen nur eine vertragliche Beziehung, und Missbrauch des geistigen Eigentums mittelbar oder unmittelbar durch den Dienstleister muss im Wege von Schadensersatzansprüchen und ähnlichem geahndet werden.

Die EP 1 784 015 A zeigt ein Verfahren, bei dem Bild- und Tondaten, wie sie sich zum Beispiel bei der Videotelephonie ergeben, gegen unberechtigte Verwendung gesichert werden, um zum Beispiel ein unerlaubtes Weitergeben oder Vervielfältigen solcher Daten zu verhindern.

Die Erfindung geht davon aus, dass geistiges Eigentum grundsätzlich durch so genannte Rechteobjekte gesichert werden kann. Dies ist z.B. für die Unterhaltungsindustrie im Zusammenhang mit auf Bild- oder Tondaten enthaltenden Datenträgern angebrachten Kopierschutzmechanismen bekannt geworden, wobei letztere ein Beispiel für ein Rechteobjekt darstellen, indem sie zwar ein Wiedergabe der jeweiligen Daten erlauben, eine Vervielfältigung jedoch verbieten. Die bekannten Verwendungsformen von Rechteobjekten sind jedoch für die oben skizzierten Einsatzgebiete zu wenig flexibel, so dass die Erfindung hier Abhilfe zu schaffen versucht.

Die Erfindung ist ein Verfahren mit den Merkmalen des Anspruchs 1, also ein Verfahren zum Betreiben einer technischen Anlage unter Verwendung von Daten, die von einem Dritten bereitgestellt und gegen unberechtigte Verwendung gesichert sind oder werden, wobei zum Sichern der Daten Rechteobjekte verwendet werden, die entweder selbst die Daten umfassen, ihrerseits von den Daten umfasst sind oder unabhängig von den Daten von dem Dritten oder durch diesen übermittelt werden, wobei für eine Verwendung konkreter Daten zumindest zwei Rechteobjekte, ein erstes und ein zweites Rechteobjekt, verwendet werden, wobei das erste Rechteobjekt eine berechtigte Verwendung der Daten mit zumindest einer hinsichtlich ihres Wertes nicht definierten Variablen spezifiziert und wobei das zweite Rechteobjekt einen Wert für die zumindest eine Variable festlegt.

Die Verwendung zumindest zweier Rechteobjekte hat den Vorteil, dass mit den mindestens zwei Rechteobjekten ein übliches Szenario bei der vertraglichen und geschäftlichen Zusammenarbeit zwischen Rechteinhaber und Dienstleister oder Dienstleistern nachgebildet werden kann: Wenn der Rechteinhaber mit einem Dienstleister z.B. einen Rahmenvertrag schließt, derart, dass der Dienstleister für den Rechteinhaber grundsätzlich Produktionskapazität, Simulationskapazität, Testkapazität, etc. zur Verfügung stellt und die dafür bereitgestellten Anlagen, Vorrichtungen usw. bestimmten Kriterien genügen, z.B. bestimmte Arbeitsschritte ausführen können (Walzen, Pressen, Tiefziehen, etc.), die Arbeitsschritte bestimmten, vom Rechteinhaber vorgegebenen Qualitätsanforderungen genügen usw., will der Rechteinhaber normalerweise, z.B. mit Hinblick auf Lagerkapazitäten und ähnliches, nicht eine Teilemenge ordern, die für sämtliche bei optimistischen Erwartungen am Markt absetzbaren Gegenstände erforderlich sind. Vielmehr will der Rechteinhaber normalerweise bedarfsorientiert einkaufen und erhält von einem Dienstleister dann Teile in einem Umfang wie sie für die Fertigung einer Charge, eines Produktionszeitraums usw. benötigt werden.

Auf einfache Zahlen und einfache Zeiträume reduziert lässt sich feststellen, dass es für einen Rechteinhaber, der z.B. Einzelteile eines komplexen Produktes durch externe Dienstleister fertigen lässt und von einem solchen Produkt 1.200 Stück erwartet jährlich verkaufen zu können, normalerweise einfacher ist, bei dem Dienstleister in jedem Monat 100 Stück der Einzelteile anzufordern als am Anfang des Jahres die komplette Menge der 1.200 Einzelteile zu ordern und dann selbst für deren Lagerung usw. zu sorgen. Dennoch sollen alle sukzessiv angeforderten Teile den gleichen Anforderungen genügen, also auf Basis gleicher Daten und gleicher Randbedingungen, also dem gewerblichen Eigentum des Rechteinhabers, gefertigt werden. Für derartige Daten ist demnach eine einmalige Übermittlung grundsätzlich ausreichend. Sobald der Dienstleister in Besitz der Daten ist, die mit dem ersten Rechteobjekt gesichert sind, wobei das erste Rechteobjekt zumindest eine hinsichtlich ihres Wertes nicht definierte Variable umfasst, kann mit jeder Übermittlung eines zweiten Rechteobjekts ein Wert der zumindest einen Variablen festgelegt werden. Bei einer Übertragung auf das oben skizzierte Szenario kann dies z. B. die Verwendung einer Variablen, die durch die Klartextbezeichnung "Produktionsmenge" bezeichnet werden kann, in einem ersten Rechteobjekt bedeuten, für die in dem zweiten Rechteobjekt ein Wert "100" festgelegt ist. Immer dann, wenn der Dienstleister ein zweites Rechteobjekt dieser Art zu dem zunächst empfangenen ersten Rechteobjekt erhält, das sich auf das herzustellende Einzelteil insgesamt bezieht, ist eine Produktion weiterer 100 Stück der jeweiligen Einzelteile möglich und durch den Rechteinhaber auch zugelassen. Die Zusammengehörigkeit von erstem und dem oder jedem zweiten Rechteobjekt ergibt sich zum einen aus der Bezugnahme auf die in dem ersten Rechteobjekt verwendete Variable in jedem zweiten Rechteobjekt. Ein Rechteobjekt, in dem einer Variablen ein Wert zugewiesen wird, die in einem mutmaßlich zugrunde liegenden ersten Rechteobjekt nicht angelegt ist, kann nicht zu diesem ersten Rechteobjekt gehören. Sodann kann die Zusammengehörigkeit von erstem und dem oder jedem zweiten Rechteobjekt auch durch eine eindeutige, bei beiden Rechteobjekten verwendete Kennzeichnung deutlich gemacht werden. Dafür kommt eine von dem Rechteobjekt umfasste Zeichenkette in Betracht, die Zeichen umfasst, die zur Kodierung der Zugehörigkeit zu einer Gruppe geeignet sind. Beispiele für eine derartige Zeichenkette sind "A123", "A124" usw., bei der das Zeichen "A" als die Zugehörigkeit zu einer Gruppe kodierend aufgefasst werden kann. Selbstverständlich kommen genauso andere Zeichen, andere Positionen des oder jedes jeweils signifikanten Zeichens usw. in Betracht. Die Zeichenfolgen "123" und "124" in dem oben gewählten Beispiel können zur Kodierung einer Hierarchie oder Abhängigkeit verwendet werden. Der Vorteil der Verwendung einer solchen Kennzeichnung besteht darin, dass durch Auswertung lediglich des Kennzeichens schnell und unkompliziert erkannt werden kann, ob ein neu empfangenes Rechteobjekt zu bereits empfangenen anderen Rechteobjekten gehört. Wenn die Kennzeichnung auch noch Bestandteile umfasst, die eine Hierarchie kodieren, kann unmittelbar erkannt werden, in welchem Verhältnis ein neu empfangenes Rechteobjekt zu bereits vorliegenden Rechteobjekten steht, also z.B. ob zu einem empfangenen Rechteobjekt bereits ein diesem hierarchisch zugrunde liegendes Rechteobjekt vorliegt.

Zweckmäßige Weiterbildungen sind Gegenstand der jeweiligen Unteransprüche. Dabei verwendete Rückbeziehungen weisen auf die weitere Ausbildung des Gegenstandes des Hauptanspruches durch die Merkmale des jeweiligen Unteranspruches hin.

Neben dem bereits skizzierten Beispiel, bei dem die Variable eine Anzahl von Produkten kodiert, die unter Verwendung der Daten hergestellt werden dürfen, und bei dem der von dem zweiten Rechteobjekt umfasste Wert für die Variable die Anzahl der Produkte konkret spezifiziert, können zusätzlich und alternativ Variablen und in einem zweiten Rechteobjekt zugehörige Werte vorgesehen sein, die sich auf eine zeitliche Nutzbarkeit der Daten oder auf den Umfang der Nutzbarkeit der Daten beziehen. Gemäß einer bevorzugten Ausführungsform ist entsprechend vorgesehen, dass die zumindest eine Variable einen Zeitraum, während dessen die Daten verwendbar sind, kodiert und der von dem zweiten Rechteobjekt umfasste Wert für die Variable den Zeitraum der Verwendbarkeit der Daten, z.B. in Form eines Anfangs- und Enddatums oder in Form einer Dauer in Stunden, Tagen, Monaten usw., etc. konkret spezifiziert.

Soweit der Umfang der Nutzbarkeit der Daten auf Seiten des Dienstleisters beschränkt sein soll, z.B. wenn der Rechteinhaber bei einem Ingenieurbüro als Dienstleister eine Simulation von Strömungseigenschaften oder ähnlichem des Einzelteils in Auftrag geben will, kann die zumindest eine Variable des ersten Rechteobjekts eine Detailtiefe, bis zu der ein Zugriff auf die Daten möglich sein soll, kodieren, so dass der von dem zweiten Rechteobjekt umfasste Wert für die Variable die jeweils zugelassene Detailtiefe spezifiziert und der Wert für die Variable so gewählt werden kann, dass alle für die Strömungssimulation notwendigen Daten, z.B. Geometrie, Oberflächenkontur, Rauhigkeit usw., für die durchzuführenden Berechnungen zugänglich sind, dennoch eine bildliche Darstellung von besonderen Einzelheiten des Einzelteils und/oder ein Ausdruck solcher Einzelheiten unmöglich ist. Ein in diesem Zusammenhang zu nennendes Schlagwort lautet "Shrink-Wrap-Model" und eine vom Rechteinhaber vorgegebene Spezifikation einer zugelassenen Detailtiefe kann zum Ergebnis haben, dass der Dienstleister von einem durch geistiges Eigentum charakterisierten Gegenstand oder Teilen eines solchen Gegenstandes nur dessen oder deren Oberfläche und keine Interna sehen kann oder sonst wie auf solche Interna zugreifen kann.

Bevorzugt ist vorgesehen, dass für den Schritt der Generierung des oder jedes abgeleiteten Rechteobjekts ein Rechteagent vorgesehen ist, welcher zur Erzeugung abgeleiteter Rechteobjekte Erzeugungsregeln verwendet, die von dem empfangenen Rechteobjekt umfasst sind. Der Rechteagent ist die zentrale Funktionalität des Verfahrens und der Rechteagent ist diejenige Instanz, welche zentral die Generierung abgeleiteter Rechteobjekte vornimmt. Wenn die Generierung abgeleiteter Rechteobjekte durch den Rechteagenten anhand von Erzeugungsregeln erfolgt, die von dem empfangenen Rechteobjekt umfasst sind, kann der Rechteinhaber, also der Versender des ursprünglichen Rechteobjekts, die Erzeugung abgeleiteter Rechteobjekte beeinflussen, z.B. beschränken, insbesondere derart, dass z.B. nicht mehr als eine bestimmte Anzahl abgeleiteter Rechteobjekte erzeugt werden, nur abgeleitete Rechteobjekte für Vorrichtungen eines bestimmten Typs und/oder Leistungsumfangs generiert werden usw. Für den Empfänger des ursprünglichen Rechteobjekts hat die Generierung abgeleiteter Rechteobjekte durch den Rechteagenten den Vorteil, dass diejenigen Vorrichtungen, an die das oder jedes abgeleitete Rechteobjekt im Verlauf des Verfahrens weitergeleitet wird, zur Erfüllung des mit dem empfangenen Rechteobjektes im Zusammenhang stehenden Auftrags genutzt werden kann.

Bevorzugt wird der Schritt des Weiterleitens abgeleiteter Rechteobjekte mittels des gleichen Rechteagenten durchgeführt. Der Rechteagent ist dazu mit der oder jeder Vorrichtung kommunikativ verbunden. Das Generieren und Weiterleiten abgeleiteter Rechteobjekte ist damit quasi "in einer Hand" und die Verwendung ein und derselben Funktionalität für beide Verfahrensschritte hat z.B. den Vorteil, dass erforderliche Daten zum Generieren und Weiterleiten abgeleiteter Rechteobjekte in Bezug auf die bei dem Betreiber als Auftragnehmer zur Verfügung stehenden Vorrichtungen nur einmal vorgehalten werden müssen, zumindest durch nur eine Funktionalität, nämlich den Rechteagenten, verarbeitet werden müssen.

Weiter bevorzugt ist vorgesehen, dass der Rechteagent zum Weiterleiten abgeleiteter Rechteobjekte Weiterleitungsregeln verwendet, die von dem empfangenen Rechteobjekt umfasst sind oder separat zur Verfügung gestellt werden. Während die vorgenannten Erzeugungsregeln sich im Wesentlichen auf Bedingungen beziehen, die der Rechteinhaber vorgibt, basieren die Weiterleitungsregeln zumindest zum Teil auch auf Bedingungen, die sich an der Art und Anzahl der beim Betreiber als Auftragnehmer einer konkreten Dienstleistung zur Verfügung stehenden Vorrichtungen orientiert. Je nach dem, in welchem Umfang der Rechteinhaber, also der Herausgeber des Rechteobjekts, auf die Weiterleitung abgeleiteter Objekte, also quasi die Rechtevergabe an einzelne Vorrichtungen des Auftragnehmers, Einfluss nehmen will, sind die Weiterleitungsregeln entweder in dem ursprünglich empfangenen Rechteobjekt enthalten oder sie werden separat zur Verfügung gestellt. Mischformen sind denkbar, derart, dass einzelne Weiterleitungsregeln oder bei komplexen Weiterleitungsregeln zu beachtende Bedingungen von dem ursprünglich empfangenen Rechteobjekt umfasst sind und dass andere Bedingungen separat vorgegebenen werden, z.B. durch den Betreiber/Auftragnehmer.

Eine bevorzugte Ausführungsform des Verfahrens zeichnet sich dadurch aus, dass ein Weiterleiten abgeleiteter Rechteobjekte aufgrund separat zur Verfügung gestellter Weiterleitungsregeln zunächst das Feststellen, welche Vorrichtung oder Vorrichtungen aus der Gruppe von Vorrichtungen zum Ausführen von Operationen, die mit dem empfangenen Rechteobjekt oder einem abgeleiteten Rechteobjekt zugelassen werden, geeignet ist bzw. sind, und sodann auch das Bilden einer Menge, welche die oder jede geeignete Vorrichtung umfasst, das Ermitteln einer momentanen oder zukünftigen Auslastung jeder von der zuvor ermittelten Menge umfassten Vorrichtung, das Reduzieren dieser Menge durch Eliminierung jeder Vorrichtung, für die eine Auslastung oberhalb eines vorgegebenen oder vorgebbaren Schwellwertes ermittelt wurde und schließlich das Weiterleiten des oder jedes abgeleiteten Rechteobjekts an die oder jede Vorrichtung, die zuletzt noch Mitglied der Menge ist, umfasst. Diese Ausgestaltung des Verfahrens eröffnet eine Möglichkeit, eine für den Betreiber, also den Auftragnehmer des Rechteinhabers, wünschenswerte Flexibilität zu implementieren. Zunächst wird festgestellt, welche der vom Betreiber vorgehaltenen Vorrichtungen überhaupt für die in Auftrag gegebene Dienstleistung verwendbar sind. Wenn mehrere Vorrichtungen grundsätzlich in Betracht kommen, kann die Weiterleitung so gesteuert werden, dass eine Weiterleitung speziell an solche Vorrichtungen oder genau die Vorrichtung erfolgt, die entsprechend ihrer Auslastung am besten für die Verwendung im Zusammenhang mit dem vom Rechteinhaber erteilten Auftrag geeignet ist. Die Auslastung und der Schwellwert in Bezug auf die Auslastung kann sich dabei auf eine zeitliche oder mengenmäßige Auslastung oder eine Kombinationen davon beziehen.

Für die Implementierung des Verfahrens ist auf Seiten des Dienstleisters eine Vorrichtung, die zumindest Empfangsfunktionalität zum Empfang von Rechteobjekten und Verarbeitungsfunktionalität, insbesondere Speicher und Verarbeitungsvorrichtung, letztere nach Art eines Prozessors oder dergleichen, zur Auswertung und Verarbeitung empfangener Rechteobjekte umfasst, vorgesehen, bei der die Verarbeitungsfunktionalität nach Empfang eines ersten, zumindest eine Variable umfassenden Rechteobjekts und Empfang eines zu dem ersten Rechteobjekt gehörigen zweiten Rechteobjekts eine Kombination der von den beiden Rechteobjekten umfassten Informationen vornimmt und daraus zumindest ein abgeleitetes Rechteobjekt generiert. Die Vorrichtung führt also das Verfahren wie eingangs und nachfolgend weiter beschrieben aus, kombiniert also ein zweites Rechteobjekt oder ggf. auch mehrere zweite Rechteobjekte mit einem zugehörigen, insbesondere früher empfangenen ersten Rechteobjekt und eventuell mit den unabhängig davon empfangenen Daten. Dabei wird für das erste Rechteobjekt und die davon umfasste mindesten eine Variable der für diese Variable in dem oder jedem zweiten Rechteobjekt definierten Wert übernommen, so dass die Kombination eine vollständige Definition dessen umfasst, was dem Dienstleister in Bezug auf die Daten, in denen das geistige Eigentum des Rechteinhabers verkörpert ist, gestattet sein soll. Die Generierung eines abgeleiteten Rechteobjekts aus dieser Kombination macht die Weiterleitung von Daten und zugehörigen Rechten auf Seiten des Dienstleisters einfacher, so dass abgeleitete Rechteobjekte auch in einer größeren Produktionsanlage oder in einem Ingenieurbüro mit mehreren Computern, die je für sich zur Simulation oder ähnlichem geeignet sind, an einzelne Geräte, Vorrichtungen oder Anlagen, weitergegeben werden können, und diese dann die Daten bestimmungsgemäß verarbeiten.

Für die Vorrichtung ist vorteilhaft vorgesehen, dass diese Mittel, die die Funktionalität eines Parsers implementieren und zur Auswertung und Verarbeitung empfangener Rechteobjekte bestimmt sind, als Bestandteil die Verarbeitungsfunktionalität umfassen. Wenn die Funktionalität eines Parsers implementiert ist, kann diese zur Auswertung einer definierten Syntax verwendet werden, wobei die Syntax eine Kenntlichmachung von Variablen oder Variablenzuweisungen erlaubt, so dass das erste Rechteobjekt eine hinsichtlich ihres Wertes nicht definierte Variable und das zweite Rechteobjekt eine Wertezuweisung für diese Variable umfassen kann. Selbstverständlich erlaubt die Funktionalität eines Parsers auch, dass andere Rechte, die dem Dienstleister in Bezug auf die Daten zugestanden werden sollen, in einer vergleichsweise einfach lesbaren und damit auch für den Rechteinhaber änderbaren Form festgelegt und kodiert werden können.

Die Erfindung betrifft schließlich ein Computerprogramm zur Ausführung des Verfahrens wie weiter oben und nachfolgend mit weiteren Details beschrieben, sodann einen Datenträger mit einem solchen Computerprogramm und ein Computersystem, insbesondere eine Vorrichtung, wie soeben skizziert, auf dem ein derartiges Computerprogramm geladen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein Szenario, mit dem sich die Erfindung befasst, nämlich einen Rechteinhabereinflussbereich mit geis- tigem Eigentum des Rechteinhabers und einem Dienst- leistereinflussbereich mit Vorrichtungen, die z.B. zur Produktion von Gütern entsprechend dem geistigem Eigentum in Betracht kommen, so dass das geistige Ei- gentum für die Inanspruchnahme von Dienstleistungen in den Dienstleistereinflussbereich übergehen muss,
- FIG 2: eine schematisch vereinfachte Darstellung des Ansat- zes gemäß der Erfindung und
- FIG 3: eine schematisch vereinfachte Darstellung einer Vor- richtung, in der die Erfindung implementiert sein kann, so dass die Vorrichtung als Rechteagent fun- giert.

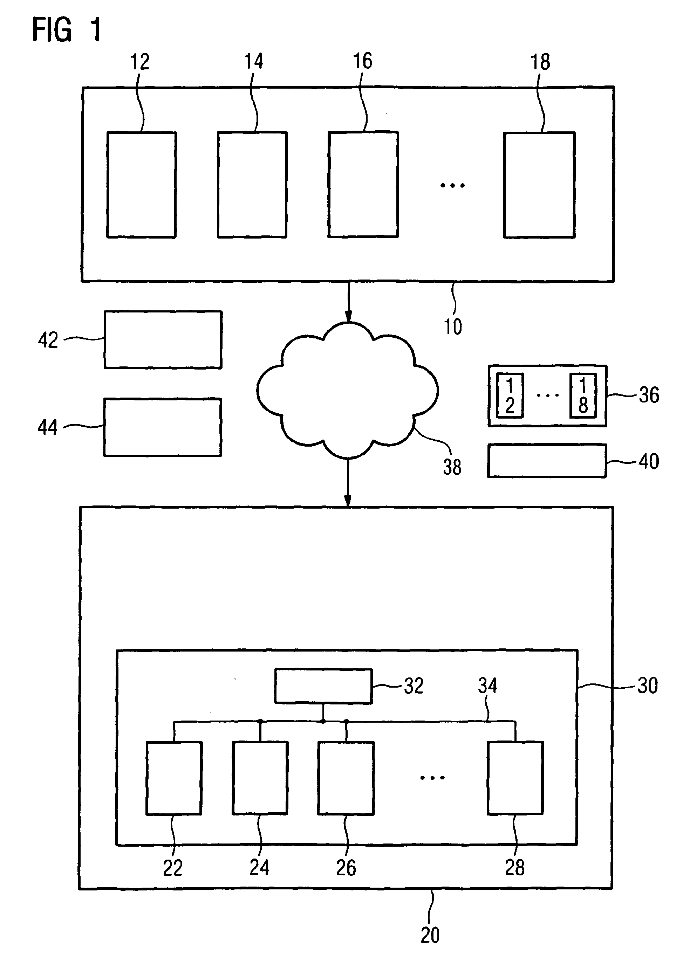

FIG 1 zeigt schematisch stark vereinfacht dargestellt ein Beispiel eines der Erfindung zugrunde liegenden Szenarios. Danach hält ein durch einen Rechteinhabereinflussbereich dargestellter Rechteinhaber 10 in seinem Einflussbereich geistiges Eigentum 12, 14, 16, 18 vor, z.B. Daten für die Herstellung bestimmter Güter, wie z.B. Kraftfahrzeugteile oder ähnliches. Wenn der Rechteinhaber 10 solche Güter nicht selbst herstellen will, muss er sich dazu eines durch einen Dienstleistereinflussbereich 20 dargestellten Dienstleisters bedienen, der in seinem Einflussbereich Produktionsmittel, z.B. Vorrichtungen 22, 24, 26, 28 vorhält, mit denen Dienstleistungen für den Rechteinhaber 10 ausgeführt werden können. Bei den Vorrichtungen 22-28 handelt es sich nicht notwendigerweise um Einrichtungen, die ein gegenständliches Ergebnis produzieren, sondern es kann sich genauso um Einrichtungen handeln, mit denen z.B. ein Simulationsergebnis o. ä. erhalten wird. Die weitere Beschreibung wird entsprechend mit dem generischen Begriff "Vorrichtung" 22-28 fortgesetzt und es soll exemplarisch davon ausgegangen werden, dass die oder jede vom Dienstleister 20 vorgehaltene Vorrichtung 22-28 Bestandteil einer technischen Anlage, also z.B. einer Produktionsanlage 30 ist, innerhalb derer die einzelnen Vorrichtungen 22-28 ggf. unter Verwendung einer übergeordneten Einheit 32 nach Art einer Leitstation kommunikativ miteinander verknüpft sind, z.B. über einen Bus 34.

Wenn der Dienstleister 20 für den Rechteinhaber 10 tätig werden soll, übermittelt dieser dem Dienstleister 20 zumindest Daten 36, also z.B. eine Produktbeschreibung, die die zu erbringende Dienstleistung beschreibt, bei einer Dienstleistung, die sich auf eine Produktion von z.B. Fahrzeugteilen bezieht, also zumindest Daten zu deren Dimension und Geometrie, Material, Oberfläche und so weiter. Für den Datenaustausch zwischen Rechteinhaber 10 und Dienstleister 20 kommt grundsätzlich jede zwischen den Parteien nutzbare kommunikative Verbindung, also auch das Internet 38, in Betracht, so dass die Produktbeschreibung zur Sicherung des davon umfassten geistigen Eigentums 12-18 des Rechteinhabers 10 mit an sich bekannten Verfahren verschlüsselt ist.

Auf Seiten des Dienstleisters 20 wird dazu ein Schlüsselpaar generiert; wenn eine asymmetrische Verschlüsselung vorgesehen ist, ein privater und ein öffentlicher Schlüssel. Der private Schlüssel bleibt beim Dienstleister 20, der öffentliche Schlüssel wird an den Rechteinhaber 10 übermittelt. Der Rechteinhaber 10 verschlüsselt die Daten 36 - die Produktbeschreibung - mit einem nur ihm bekannten Schlüssel. Das Rechteobjekt wird mit dem öffentlichen Schlüssel, den es zuvor von dem Dienstleister 20 erhalten hat, verschlüsselt, und der Schlüssel, mit dem die Produktbeschreibung verschlüsselt ist, ist in dem Rechteobjekt enthalten. Der Dienstleiter 20 bekommt dann vom Rechteinhaber 10 die Produktbeschreibung und das Rechteobjekt. Der Dienstleister 20 entschlüsselt das Rechteobjekt mit seinem privaten Schlüssel aus der vorherigen Schlüsselgenerierung, und mit dem dann möglichen Zugriff auf das Rechteobjekt hat der Dienstleister 20 zwar nicht per personam, aber durch seine EDV, z.B. einen Rechteagenten, Zugriff auf die Daten in der Produktbeschreibung. Tatsächlich bleibt der in einem Rechteobjekt enthaltene Schlüssel dem jeweiligen Verwender üblicherweise verborgen.

Rechteinhaber 10 und Dienstleister 20 tauschen also vor, im Zusammenhang mit oder nach Übermittlung der Daten 36/ der Produktbeschreibung Schlüsseldaten 40 aus, die dem Dienstleister 20 einen Zugriff auf die verschlüsselten Daten 36 und/oder eine Überprüfung der Authentizität der Daten 36 erlauben.

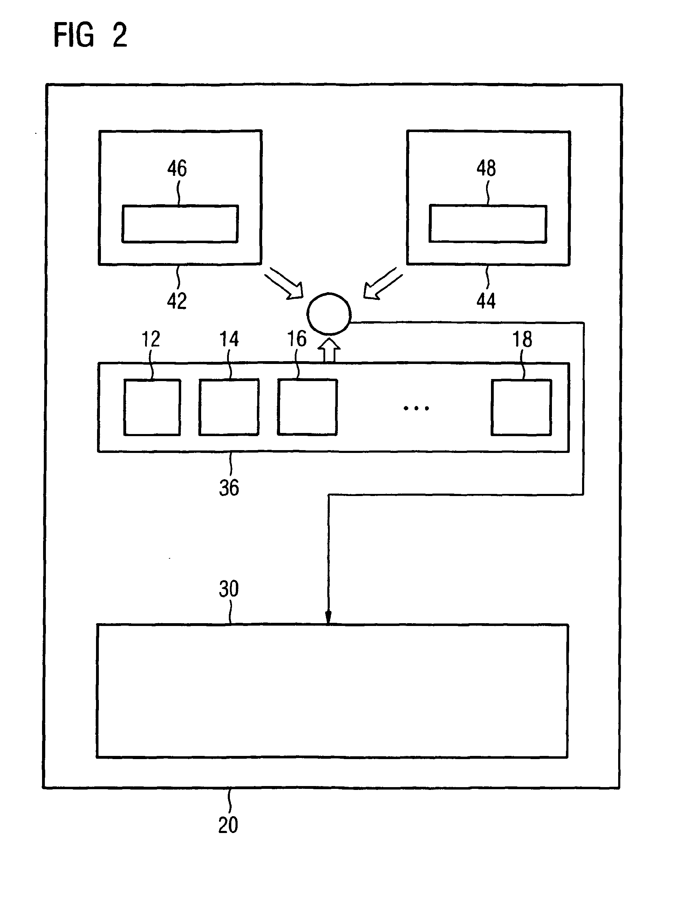

Die Daten 36 sind mit einem vom ersten Rechteobjekt 42 umfassten, zunächst nur dem Rechteinhaber 10 bekannten Schlüssel gegen unberechtigte Verwendung gesichert, das zusammen mit den Daten 36 oder separat übertragen wird. Zusätzlich zur Übertragung dieses ersten Rechteobjekts 42 erfolgt unabhängig davon, ggf. zeitlich deutlich später als die Übermittlung des ersten Rechteobjekts 42 oder mehrfach hintereinander in vergleichsweise regelmäßigen Abständen, eine Übermittlung eines zweiten Rechteobjekts 44. Für die weitere Erläuterung des Zusammenwirkens von Daten 36, erstem und zweitem Rechteobjekt 42, 44, wird auf die nachfolgende, sich auf FIG 2 beziehende Beschreibung verwiesen.

FIG 2 zeigt einzelne Details der Darstellung aus FIG 1 und geht davon aus, dass die vom Rechteinhaber 10 (FIG 1) übersandten Daten 36 und ein ebenfalls von diesem übermitteltes erstes und zweites Rechteobjekt 42, 44 im Einflussbereich des Dienstleisters 20 vorliegen.

Die Verwendung der Daten 36 ist dem Dienstleister 20 nur mittels der Rechteobjekte 42, 44 möglich. Dazu spezifiziert das erste Rechteobjekt 42 eine berechtigte Verwendung der Daten 36 mit zumindest einer hinsichtlich ihres Wertes nicht definierten Variablen 46. Als hinsichtlich ihres Wertes nicht definierte Variable, im Folgenden kurz als "Variable" bezeichnet, kommt z.B. eine Variable in Betracht, die eine zugelassene Produktionsmenge kodiert. Das erste Rechteobjekt 42 kann danach die weitestgehende Verwendbarkeit der Daten 36 zulassen, wobei z.B. lediglich eine Produktion von Gegenständen auf Basis dieser Daten 36 noch nicht möglich ist, weil keine konkrete Anzahl zugelassener Gegenstände definiert ist. Zu diesem Zweck ist das unabhängig vom ersten Rechteobjekt 42 übermittelte zweite Rechteobjekt 44 vorgesehen, das einen Wert 48 für die zumindest eine, von dem ersten Rechteobjekt 42 umfasste Variable 46 festlegt.

Eine Kombination der Daten 36 und des ersten und zweiten Rechteobjekts 42, 44, letzteres zumindest eine Zuweisung des Wertes 48 an die vom ersten Rechteobjekt 42 definierte Variable 46 umfassend, macht also die Daten 36 für eine berechtigte Verwendung durch den Dienstleister 20 zugänglich. Diese Kombination ist in der Darstellung in FIG 2 durch die Blockpfeile verdeutlicht, und nach der Kombination ist eine Weiterleitung der vom Rechteinhaber 10 erhaltenen Daten 36 in der Anlage 30 des Dienstleisters 20 zum Erbringen der durch den Rechteinhaber 10 in Auftrag gegebenen Dienstleistungen möglich.

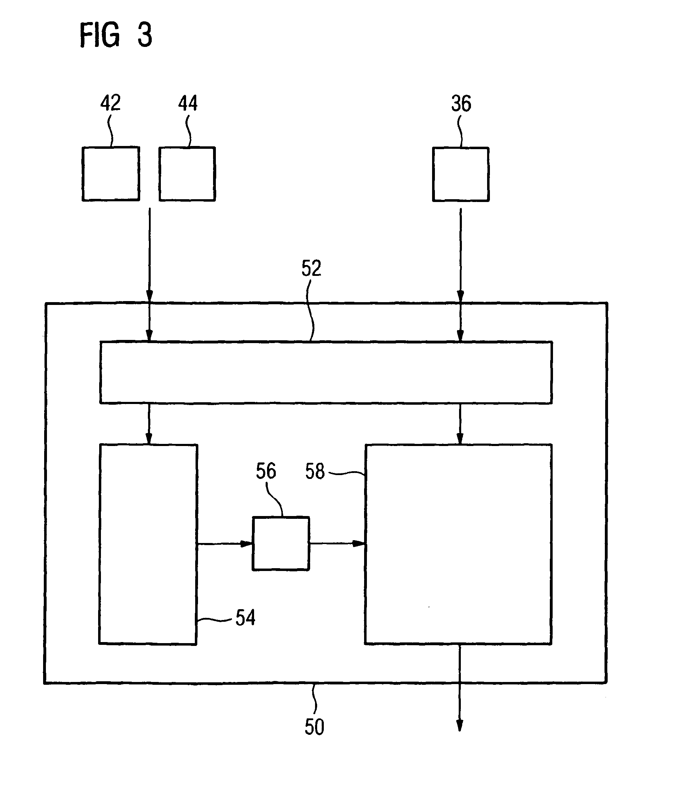

FIG 3 zeigt schematisch vereinfacht eine vom Dienstleister 20 (FIG 2) in dessen Einflussbereich vorgehaltene Vorrichtung 50 zur Ausführung des bisher skizzierten Verfahrens. Die Vorrichtung 50 umfasst als Mittel zur Ausführung des Verfahrens zumindest eine Empfangsfunktionalität 52 zum Empfang von Rechteobjekten, nämlich zumindest eines ersten und zweiten Rechteobjekts 42, 44. Sodann umfasst die Vorrichtung 50 Verarbeitungsfunktionalität 54, zumindest letztere mit nicht dargestelltem Speicher und nicht dargestellter Verarbeitungsvorrichtung nach Art eines Prozessors oder dergleichen, zur Auswertung und Verarbeitung empfangener Rechteobjekte. Die Verarbeitungsfunktionalität 54 generiert nach Übernahme eines ersten, zumindest eine Variable 46 umfassenden Rechteobjekts 42, von der Empfangsfunktionalität 52 und ebensolcher Übernahme eines zu dem ersten Rechteobjekt 42 gehörigen zweiten Rechteobjekts 44 ein abgeleitetes Rechteobjekt 56 als Kombination der von erstem und zweitem Rechteobjekt 42, 44 umfassten Informationen. Bei dieser Kombination, also bei der Generierung des abgeleiteten Rechteobjekts 56 wird die von dem ersten Rechteobjekt 42 umfasste Variable 46 durch den von dem zweiten Rechteobjekt 44 für deren Definition umfassten Wert 48 ersetzt, so dass das abgeleitete Rechteobjekt 56 den dem Dienstleister 20 (FIG 2) zugelassenen Umfang des Zugriffs auf die erhaltenen Daten 36 definiert.

Eine funktional nachgeschaltete Rechtemanagementfunktionalität 58 nimmt mit dem abgeleiteten Rechteobjekt 56 Zugriff auf die empfangenen Daten 36, und am Ausgang einer solchen Finktionalität stehen die vom Rechteinhaber 10 gegen unberechtigte Verwendung geschützten Daten 36 zur Verwendung durch den Dienstleister 20 zur Verfügung. Die Vorrichtung 50 und die davon umfassten Funktionalitäten 52, 54, 58 können als verteilte Vorrichtung implementiert sein, so dass z.B. die Empfangsfunktionalität 52 von der Leitstation 32 (FIG 1) und eine Kombination von Verarbeitungs- und Rechtemanagementfunktionalität 54, 58 von jeder Vorrichtung 22-28 (FIG 1) umfasst ist. Ähnlich kann vorgesehen sein, dass Empfangs- und Verarbeitungsfunktionalität 52, 54 von der Leitstation 32 und eine entsprechende Vielzahl von Rechtemanagementfunktionalitäten 58 den jeweiligen Vorrichtungen 22-28 zugeordnet ist. Gleichfalls kommt auch in Betracht, dass die Vorrichtung 50, wie in FIG 3 dargestellt, als separater Kommunikationsteilnehmer an dem Bus 34 der Anlage 30 ausgeführt ist und zentral das Rechtemanagement für eine komplette Anlage 30, also das Empfangen von Daten 36 und Rechteobjekten 42, 44, die Kombination zusammengehöriger erster und zweiter Rechteobjekte 42, 44 und die daran anschließende Generierung abgeleiteter Rechteobjekte 56 sowie die Weiterleitung damit zugänglich werdender Daten an einzelne oder mehrere Vorrichtungen 22-28, vornimmt.

Zumindest die Verarbeitungsfunktionalität 54 umfasst nicht dargestellte Mittel, die die Funktionalität eines Parsers implementieren. Dieser wird im Betrieb durch die erwähnte Verarbeitungsvorrichtung ausgeführt und nutzt den der Verarbeitungsfunktionalität 54 zugeordneten Speicher. Derartige Mittel sind zur Auswertung und Verarbeitung empfangener Rechte bestimmt. Die Verwendung eines Parsers erlaubt die Zugrundelegung einer definierten Syntax für die von den Rechteobjekten 42, 44 umfassten Informationen, so dass, soweit Variable 46 und ein dieser zuzuweisender Wert 48 (FIG 2) betroffen sind, ein Beispiel für den Inhalt eines ersten und zweiten Datenobjekts 42, 44 nachfolgend exemplarisch wie folgt angegeben werden kann:

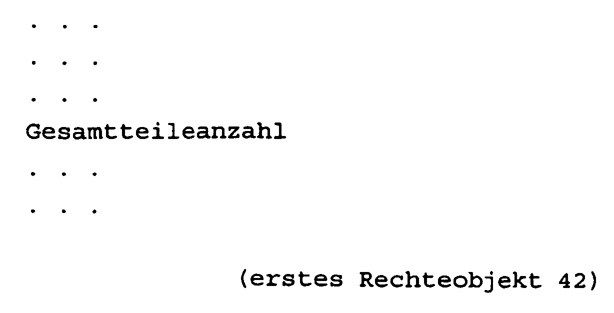

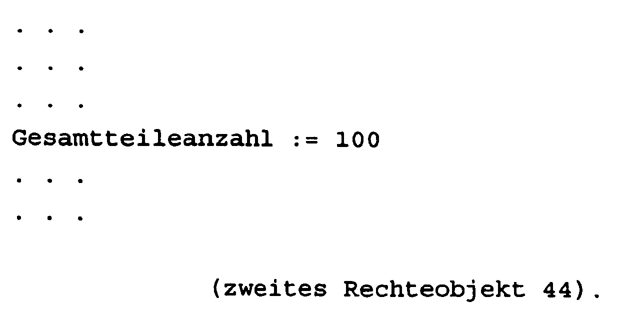

Damit lässt sich die Erfindung kurz wie folgt darstellen:
Es wird ein Verfahren und eine nach dem Verfahren arbeitende Vorrichtung zum Betreiben einer technischen Anlage 30 unter Verwendung von Daten 36, die von einem Dritten bereitgestellt und gegen unberechtigte Verwendung gesichert sind oder werden, angegeben, wobei zum Sichern der Daten 36 Rechteobjekte, nämlich zumindest ein erstes und ein zweites Rechteobjekt, 42, 44 verwendet werden, wobei das erste Rechteobjekt 42 eine berechtigte Verwendung der Daten 36 mit zumindest einer hinsichtlich ihres Wertes nicht definierten Variablen 46 spezifiziert und wobei das zweite Rechteobjekt 44 einen Wert 48 für die zumindest eine Variable 46 festlegt.

## Patentansprüche

1. Verfahren zum Betreiben einer technischen Anlage (30) unter Verwendung von Daten (36), die von einem Dritten bereitgestellt und gegen unberechtigte Verwendung gesichert sind oder werden,
wobei zum Sichern der Daten (36) Rechteobjekte verwendet werden, die entweder selbst die Daten (36) umfassen, ihrerseits von den Daten (36) umfasst sind oder unabhängig von den Daten (36) von dem Dritten oder durch diesen übermittelt werden, wobei für eine Verwendung konkreter Daten (36) zumindest zwei Rechteobjekte, ein erstes und ein zweites Rechteobjekt (42, 44), verwendet werden,
wobei das erste Rechteobjekt (42) eine berechtigte Verwendung der Daten (36) mit zumindest einer hinsichtlich ihres Wertes nicht definierten Variablen (46) spezifiziert und
wobei das zweite Rechteobjekt (44) einen Wert (48) für die zumindest eine Variable (46) festlegt.

2. Verfahren nach Anspruch 1, wobei die zumindest eine Variable (46) einen Zeitraum, während dessen die Daten (36) verwendbar sind, kodiert und der von dem zweiten Rechteobjekt (44) umfasste Wert (48) für die Variable (46) den Zeitraum der Verwendbarkeit der Daten (36) konkret spezifiziert.

3. Verfahren nach Anspruch 1, wobei die zumindest eine Variable (46) eine Anzahl von Produkten, die unter Verwendung der Daten (36) hergestellt werden dürfen, kodiert und der von dem zweiten Rechteobjekt (44) umfasste Wert (48) für die Variable (46) die Anzahl der Produkte konkret spezifiziert.

4. Verfahren nach Anspruch 1, wobei die zumindest eine Variable (46) eine Detailtiefe, bis zu der ein Zugriff auf die Daten (36) möglich sein soll, kodiert und der von dem zweiten Rechteobjekt (44) umfasste Wert (48) für die Variable (46) die jeweils zugelassene Detailtiefe spezifiziert.

5. Vorrichtung (50), welche Mittel zur Ausführung des Verfahrens nach einem der vorangehenden Ansprüche umfasst,
wobei diese Mittel Empfangsfunktionalität (52) zum Empfang von Rechteobjekten (42,44) und Verarbeitungsfunktionalität (54) zur Auswertung und Verarbeitung empfangener Rechteobjekte (42,44) umfassen,
**dadurch gekennzeichnet,**
**dass** die Verarbeitungsfunktionalität (54) dafür eingerichtet ist, nach Empfang eines ersten, zumindest eine Variable (46) umfassenden Rechteobjekts (42) und Empfang eines zu dem ersten Rechteobjekt (42) gehörigen zweiten Rechteobjekts (44) eine Kombination der von den beiden Rechteobjekten (42,44) umfassten Informationen vorzunehmen und daraus zumindest ein abgeleitetes Rechteobjekt (56) zu generieren.

6. Vorrichtung nach Anspruch 5, mit Mitteln, die die Funktionalität eines Parsers implementieren, die zur Auswertung und Verarbeitung empfangener Rechteobjekte (42,44) bestimmt sind und von der Verarbeitungsfunktionalität (54) umfasst sind.

7. Computerprogramm, das Anweisungen umfasst, die die Vorrichtung (50) nach Anspruch 5 zur Ausführung der Verfahrensschritte gemäß einem der Ansprüche 1 bis 4 veranlassen, wenn diese Anweisungen in eine Verarbeitungsfunktionalität (54) der Vorrichtung (50) geladen sind.

8. Datenträger, auf dem ein Computerprogramm nach Anspruch 7 gespeichert ist.

## Claims

1. Method for operating a technical installation (30) using data (36) that is provided by a third party and that is or will be protected against unauthorized use,
with rights objects being used to protect the data (36) that either encompass the data (36) themselves, are encompassed for their part by the data (36) or are transferred independently of the data (36) from the third party or through the latter, with at least two rights objects, a first and a second rights object (42, 44), being used for use of actual data (36),
with the first rights object (42) specifying an authorized use of the data (36) with at least one variable (46) not defined in respect of its value and
with the second rights object (44) defining a value (48) for the at least one variable (46).

2. Method according to claim 1, with the at least one variable (46) encoding a period during which the data (36) is usable, and the value (48) encompassed by the second rights object (44) specifying in concrete terms for the variable (46) the period during which the data (36) is able to be used.

3. Method according to claim 1, with the at least one variable (46) encoding a number of products which may be manufactured using the data (36), and the value (48) encompassed by the second rights object (44) specifying in concrete terms for the variable (46) the number of the products.

4. Method according to claim 1, with the at least one variable (46) encoding a level of detail down to which access to the data (36) is to be possible, and the value (48) included in the second rights object (44) for the variable (46) specifying the permitted level of detail.

5. Facility (50) with means for executing the method according to one of the preceding claims,
wherein the means comprises receive functionality (52) for receiving rights objects (42, 44) and processing functionality (54), especially memory and processing facilities, for evaluating and processing received rights objects (42, 44), **characterised in that**
the processing functionality (54) is configured to, after receipt of a first rights object (42) including at least one variable (46) and after receipt of a second rights object (44) belonging to the first rights object (42), carry out a combination of the information encompassed by the two rights objects (42, 44) and generate from said information at least one derived rights object (56).

6. Facility according to claim 5, with means that implement the functionality of a parser which are intended for evaluating and processing received rights objects (42, 44) and are encompassed by the processing functionality (54).

7. Computer program which comprises instructions which cause the facility (50) according to claim 5 to execute the method steps according to one of claims 1 to 4 when these instructions are loaded into a processing functionality (54) of the facility (50).

8. Data medium on which a computer program according to claim 7 is stored.

## Revendications

1. Procédé pour faire fonctionner une installation ( 30 ) technique en utilisant des données ( 36 ) qui sont mises à disposition par un tiers et qui sont sécurisées à l'encontre d'une utilisation non autorisée,
dans lequel, pour sécuriser les données, on utilise des objets de droit, qui comprennent soit les données ( 36 ) elles-mêmes, sont comprises de leur côté par les données ( 36 ) ou sont transmises indépendamment des données ( 36 ) du tiers ou par celui-ci, dans lequel on utilise, pour une utilisation de données ( 36 ) concrètes au moins deux objets de droit, un premier et un deuxième objets ( 42, 44 ) de droit,
dans lequel le premier objet ( 42 ) de droit spécifie une utilisation autorisée des données ( 36 ) par au moins une variable ( 46 ) non définie en ce qui concerne sa valeur et dans lequel le deuxième objet ( 44 ) de droit fixe une valeur ( 48 ) de la au moins une variable ( 46 ).

2. Procédé suivant la revendication 1, dans lequel la au moins une variable ( 46 ) code un laps de temps pendant lequel les données ( 36 ) peuvent être utilisées et la valeur ( 48 ), comprise par le deuxième objet ( 44 ) de droit, de la variable ( 46 ) spécifie concrètement le laps de temps de la possibilité d'utiliser les données ( 36 ).

3. Procédé suivant la revendication 1, dans lequel la au moins une variable ( 46 ) code un certain nombre de produits qui peuvent être fabriqués en utilisant les données ( 36 ) et la valeur ( 48 ), comprise par le deuxième objet ( 44 ) de droit, de la variable ( 46 ) spécifie concrètement le nombre des produits.

4. Procédé suivant la revendication 1, dans lequel la au moins une variable ( 46 ) code une profondeur de détail jusqu'à laquelle un accès aux données ( 36 ) doit être possible et la valeur ( 48 ), comprise par le deuxième objet ( 44 ) de droit, de la variable ( 46 ) spécifie la profondeur de détail autorisée respectivement.

5. Dispositif ( 50 ) qui comprend des moyens de réalisation du procédé suivant l'une des revendications précédentes,
dans laquelle ces moyens comprennent une fonctionnalité ( 52 ) de réception pour la réception d'objets ( 42, 44 ) de droit et une fonctionnalité ( 54 ) de traitement pour l'exploitation et le traitement des objets ( 42, 44 ) de droit qui sont reçus, **caractérisé**
**en ce que** la fonctionnalité ( 54 ) de traitement est conçue pour, après réception d'un premier objet ( 42 ) de droit comprenant au moins une variable ( 46 ) et réception d'un deuxième objet ( 44 ) de droit appartenant au premier objet ( 42 ) de droit, effectuer une combinaison des informations comprises par les deux objets ( 42, 44 ) de droit et en produire au moins un objet ( 56 ) de droit dérivé.

6. Dispositif suivant la revendication 5, comprenant des moyens qui mettent en oeuvre la fonctionnalité d'un analyseur qui sont destinés à l'exploitation et au traitement d'objets ( 42, 44 ) de droit reçus et qui sont englobés par la fonctionnalité ( 54 ) de traitement.

7. Programme informatique qui comprend des instructions qui font fonctionner le dispositif ( 50 ) suivant la revendication 5 pour la réalisation des stades de procédé suivant l'une des revendications 1 à 4, lorsque ces instructions sont chargées dans une fonctionnalité ( 54 ) de traitement du dispositif ( 50 ).

8. Support de données sur lequel un programme informatique suivant la revendication 7 est mémorisé.
